# EUROPEAN PATENT APPLICATION

(11) **EP 2 123 804 A1**
(43) Date of publication of application: **25.11.2009**
(21) Application number: 07816880.4
(22) Date of filing: 20.11.2007
(51) Int. Cl.: D01F 6/40

(54) **A MODIFIED POLYACRYLONITRILE FIBER AND ITS PREPARATION PROCESS AND USE**

(30) Priority: 12.12.2006 CN 200610130084
(71) Applicant: Hiking Group Co., Ltd, Qingdao, Shandong 266071 (CN)
(72) Inventor: ZHANG, Jianhua, Shenzhen (CN); ZHANG, Xingxiang, Tianjin 300160 (CN); WANG, Xuechen, Tianjin 300160 (CN); CUI, He, Tianjin 300160 (CN); NIU, Jianjin, Tianjin 300160 (CN)
(74) Representative: Kramer - Barske - Schmidtchen
(86) International application number: PCT/CN2007/003280
(87) International publication number: WO 2008/071062

(57) **Abstract**

A modified polyacrylonitrile fiber and its preparation process and use are disclosed. The biologic protein is used as the modifier of the modified polyacrylonitrile fiber. The weight percent of each component is showed below: the acrylonitrile monomer 50.0-98.8%, the initiator 0.1-0.4%, the biologic protein 1.0-50.0%, the total weight percent of each component is 100%. The preparation process of the modified polyacrylonitrile fiber is depended on the formulation of said modified polyacrylonitrile fiber of the invention. The preparation process includes the following steps: 1. preparing the biologic protein solution, 2. preparing spinning dope of the modified polyacrylonitrile fiber, 3. preparing the modified polyacrylonitrile fiber. The designed filament number of the fiber is 30-100dtex. The fiber is suitable for making synthetic hair product such as hairpiece etc., and has well emulated effect.

## Description

### FIELD OF THE INVENTION

The invention relates to a synthetic fiber and method of preparing the same, and more particularly to a polyacrylonitrile fiber with a biological protein as modifier, a method of preparing the modified polyacrylonitrile fiber, as well as applications thereof. The international classification is Int.Cl D01F 8/02 ( 2006.01 ).

### DESCRIPTION OF RELATED ART

For hundreds of years, human hair has been used for the preparation of artificial hair for men and women. Due to various colors, beautiful appearance, gloss, excellent comfort, good handling, skilled weaving, designable curling and shape, human hair, particularly originated from China, Indonesia, India, and several European countries, has promoted the demand of human hair products, which, conversely, promoted industrial development and wide application.

Because of increased demand and relative shortage, the price of human hair has been higher and higher. Therefore, since the beginning of 1970s, synthetic hair made from polymer fibers has been widely developed. For example, U.S. Patent No. 3,687,752 discloses a method of preparing synthetic hair with acrylonitrile.

Undoubtedly, in order to effectively seize market share, synthetic hair prepared from polymer fibers should have similar properties to human hair. International Patent Publication No. WO2005/033384 discloses a method of preparing synthetic hair with polyvinyl chloride. The method aims at improving flame retardancy of the synthetic hair.

International Patent Publication No. WO2006/035868 discloses a method of preparing synthetic hair including adding a plurality of flame retardants to polyalkylene terephthalate. The method was also aimed at improving the flame retardancy of the synthetic hair. '

U. S. Patent Application No. 2006/0000482 discloses a method of preparing synthetic hair including forming a layer of crosslinking of aliphatic polyurethane on the surface of common polymer fibers. The synthetic hair had similar appearance to human hair.

U. S. Patent Application No. 2006/0024497 discloses a method of preparing synthetic hair with acrylonitrile. The method aimed at improving the appearance of synthetic hair, and the resultant synthetic hair had flickering gloss. However, the synthetic hair was composed of polymers, totally different from the internal components of genuine human hair, so the properties were not as good as those of human hair.

International Patent Publication No. WO2006/002572 discloses a method of preparing textile fibers containing biological proteins. The textile fibers consisted of wool protein and polyvinyl alcohol. However, the fibers were mainly used for the preparation of clothes, and were not suitable for the preparation of synthetic hair because the textile fibers were highly hydrophilic, had no waterproof capability, and their curling was much different from human hair. Furthermore, the spinning dope concentration of the fibers for common textile or clothes and containing proteins is generally not more than 20% by weight, however, a filament titer of fibers for synthetic hair is 30-100 dtex, which cannot be achieved by the above-mentioned spinning dope concentration.

### SUMMARY OF THE INVENTION

In view of the above-described problems, it is an objective of the invention to provide a modified polyacrylonitrile fiber with biological proteins as a modifier and having similar components and properties to human hair.

It is another objective of the invention to provide a method of preparing a modified polyacrylonitrile fiber with biological proteins as a modifier and having similar components and properties to human hair.

It is still another objective of the invention to provide a use of a modified polyacrylonitrile fiber with biological proteins as a modifier and having similar components and properties to human hair.

To achieve the above objectives, in accordance with one embodiment of the invention, provided is a starting solution for preparation of modified polyacrylonitrile fiber with biological proteins as a modifier, comprising:
an acrylonitrile monomer 50.0-98.9 weight %;
an initiator 0.1-0.4 weight %; and
a biological protein 1.0-50.0 weight %;
the total weight percent of all component being 100%.

In a class of this embodiment, the acrylonitrile monomer is selected from: acrylonitrile, methyl acrylonitrile, butenenitrile, and a mixture thereof.

In another class of this embodiment, the initiator is: (i) a free radical initiator selected from azobisisobutyronitrile, azobisisoheptonitrile, benzoyl peroxide; or (ii) an oxidation-reduction initiator selected from potassium persulfate - sodium bisulfite, ammonium persulfate - sodium bisulfite, sodium chlorate - sodium bisulfite, sodium hypochlorite - sodium bisulfate, and a mixture thereof.

In another class of this embodiment, the biological protein is obtained by a mechanical or chemical method from natural animal fibers selected from wool, cattle hair, horse hair, rabbit hair, camel hair, yak hair, and/or human hair.

In accordance with another embodiment of the invention, provided is a method of preparing a modified polyacrylonitrile fiber. Based on the above-mentioned composition of the modified polyacrylonitrile fiber, the method comprises the steps of:
1) preparing a solution comprising biological proteins: a) separating biological proteins by a mechanical or chemical method from natural animal fibers selected from wool, cattle hair, horse hair, rabbit hair, camel hair, yak hair, and/or human hair; b) purifying the biological proteins and dissolving with 15-45 weight% nitric acid solution, zinc chloride solution, or sodium thiocyanate solution to give a biological protein solution; the chemical method for separating the biological proteins comprises acid-base treatment, reduction, and oxidation;
2) preparing a spinning dope of modified polyacrylonitrile fiber: initiating a polymerization between the solution comprising biological proteins and an acrylonitrile monomer by an initiator at 30-70°C to give a spinning dope of modified polyacrylonitrile fiber comprising biological proteins; the reaction time is 2-10 hours, and the concentration of the spinning dope is 10-50 weight%; and
3) preparing a modified polyacrylonitrile fiber: preparing a modified polyacrylonitrile fiber comprising biological proteins from the spinning dope of modified polyacrylonitrile fiber by a solution spinning technology.

In another aspect, the invention provides a use of a modified polyacrylonitrile fiber. The fiber is used for the preparation of synthetic hair and various artificial hair products.

Advantages of the invention are summarized as follows:
1) The fiber comprises appropriate biological proteins, either its components or properties are close to those of human hair, so the fiber is a good substitute of human hair;
2) The preparation method of the fiber is simple and easy for mass production, and does not require special equipment and treatment; and
3) The fiber is particularly suitable for the preparation of synthetic hair, for example, wigs and wig sheaths resembled well human hair.

### DETAILED DESCRIPTION OF THE EMBODIMENTS

In an embodiment of the invention, provided is a composition useful for preparing a modified polyacrylonitrile fiber (hereinafter referred to as a "fiber") with biological proteins as a modifier, comprising:
acrylonitrile monomer 50.0-98.9 weight %;
initiator 0.1-0.4 weight %; and
biological protein 1.0-50.0 weight %;
the total weight percent of all components being 100%.

The above-mentioned weight proportions (including the components and weight percents thereof) are for illustration only. In the formula, the initiator content is very low. In some cases, when the initiators are added, the weight percent of acrylonitrile monomers and/or biological proteins may be decreased so that the total weight percent of each component is 100%.

The acrylonitrile monomers used in compositions and methods of the invention are selected from acrylonitrile, methyl acrylonitrile, butenenitrile, and a mixture thereof.

Different acrylonitrile monomers have different price, and affect the cost of the final product, but do not affect the implementation of the invention.

In order for the modified polyacrylonitrile fiber to have good flame retardancy, curling, and natural gloss, a second monomer can be optionally added to copolymerize with the acrylonitrile monomers. After the introduction of the second monomer, a composition for preparing a modified polyacrylonitrile fiber of the invention comprises:
a first acrylonitrile monomer 30.0-96.9 weight %;
a second monomer 2.0-20.0 weight %;
an initiator 0.1-0.4 weight %; and
a biological protein 1.0-50.0 weight %;
the total weight percent of all components being 100%.

The second monomer is selected from acrylic acid, methyl acrylate, ethyl acrylate, butyl acrylate, 2-hydroxyethyl acrylate, methacrylic acid, methyl methacrylate, ethyl methacrylate, propyl methacrylate, butyl methacrylate, 2-hydroxyethyl methacrylate, styrene, methyl styrene, vinyl acetate, methylenebutanedioic acid, vinyl chloride, vinylidene chloride, vinyl bromide, vinylidene bromide, vinylidene fluoride, and a mixture thereof.

The above-mentioned compounds functioning as the second monomer can improve all or part of the properties of the fiber.

The weight percent of the second monomer in all the components of the fiber is 2.0-20.0%, particularly 3.0-18.0%, and more particularly 5.0-15.0%.

If the content of the second monomer is too low, the structure and properties of the polyacrylonitrile fiber will not be improved. If the content of the second monomer is too high, the properties difference between the modified polyacrylonitrile fiber and a polyacrylonitrile fiber may be relatively high, which will make the modified polyacrylonitrile fiber lose its original handle and bulking property.

In certain embodiments of the invention, the components and structure of the modified polyacrylonitirle fiber are flexibly controlled by adjusting the type and amount of the second monomer, and the resultant modified polyacrylonitrile fiber has a good flame retardancy, curling, and natural gloss.

When the second monomer is selected from vinyl chloride, vinylidene chloride, vinyl bromide, vinylidene bromide, and a mixture thereof, and vinylidene fluoride is added, the modified polyacrylonitrile fiber has much better flame retardancy.

Subject to the content of the second monomer, the limiting oxygen index of the fiber may reach 22-28%. The flame retardancy is very important for artificial hair, so the above-mentioned second monomers are preferable.

Additionally, based on special needs, other type of second monomers are also practicable.

In the formula of the modified polyacrylonitrile fiber, when the second monomer is added, the weight percent of acrylonitrile monomers and/or biological proteins may be decreased so that the total weight percent of each component adds up to 100%.

In another embodiment of the invention, a third monomer may be added to the mixture for preparing a modified polyacrylonitrile fiber. After the introduction of the third monomer, the mixture for preparing the polyacrylonitrile fiber of the invention comprises:
an acrylonitrile monomer 20.0-96.8 weight %;
a second monomer 2.0-20.0 weight %;
a third monomer 0.1-10.0 weight %;
an initiator 0.1-0.4 weight %; and
a biological protein 1.0-50.0 weight %;
the total weight percent of each component being 100%.

The third monomer has dye affinity groups, and is selected from sodium methacrylate sulfonate, sodium methallyl sulfonate, sodium allylsulfonate, p-styrenesulfonic acid sodium salt, sodium vinylsulfonate, sulfoalkyl acrylate, and sulfoalkyl methacrylamide.

The addition of the third monomer can improve the dyeing property of the modified polyacrylonitrile fiber.

The weight percent of the third monomer in all the components of the fiber is 0.1-10.0%, particularly 0.4-4.0%, and more particularly 0.5-3.0%.

In the formula of the modified polyacrylonitrile fiber, when the third monomer is added, the weight percent of the acrylonitrile monomers, and/or the second monomer, and/or biological proteins may be decreased so that the total weight percent of each component adds up to 100%.

Undoubtedly, as needed, the third monomer can also be singly added to the above-mentioned basic formula, and the total weight percent of each component are adjusted to 100% accordingly.

When the contents of the biological proteins, the initiators, the second monomer, the third monomer, and a chain transfer agent are controlled at an appropriate range, the weight percent of the acrylonitrile monomer is 20.0-89.2%, and the total weight percentage of all components is 100%.

Based on the various formula having different components and contents, a series of modified polyacrylonitrile fibers are prepared.

The preparation method comprises the steps of:

1). preparing a solution comprising biological protein: a) separating biological proteins by a mechanical or chemical method from natural animal fibers selected from wool, cattle hair, horse hair, rabbit hair, camel hair, yak hair, and/or human hair; b) purifying the biological proteins and dissolving in 15-45 weight % nitric acid solution, zinc chloride solution, or sodium thiocyanate solution to give a biological protein solution; the chemical method for separating the biological proteins comprises acid-base treatment, reduction, and oxidation;

2). preparing a spinning dope of modified polyacrylonitrile fiber: initiating a polymerization between the solution comprising biological proteins and an acrylonitrile monomer by an initiator at 30-70°C to give a spinning dope of modified polyacrylonitrile fiber comprising biological proteins; the reaction time is 2-10 hours, and the concentration of the spinning dope is 10-50 weight %;

When the second monomer, or the second monomer and the third monomer are added to the basic formula, the polymerization between the biological protein solution and the acrylonitrile monomer initiated by the initiators continues. That is to say, modified components and contents of formula have no influence on the preparation of the fiber.

3). preparing a modified polyacrylonitrile fiber: preparing a modified polyacrylonitrile fiber comprising biological proteins from the spinning dope of modified polyacrylonitrile fiber by a solution spinning technology.

In one embodiment of the invention, the preferable initiators for initiating polymerization between the biological protein solution and the acrylonitrile monomer, or between the biological protein solution, the acrylonitrile monomer, and the second monomer, or between the biological protein solution, the acrylonitrile monomer, the second monomer, and the third monomer, are free radical initiators selected from azobisisobutyronitrile, azobisisoheptonitrile, and benzoyl peroxide; or oxidation-reduction initiators selected from potassium persulfate - sodium bisulfite, ammonium persulfate - sodium bisulfite, sodium chlorate - sodium bisulfite, and sodium hypochlorite - sodium bisulfite.

Experiments have shown the weight percent of the initiators in all the components of the fiber is 0.1-0.4%, particularly 0.1-0.35%, and more particularly 0.1-0.3%. If the content of the initiators is too low, the induction period of the polymerization will be prolonged, which is inefficient. If the content of the initiators is too high, the reaction will occur quickly, which may lead to runaway polymerization and loss of control over the polymerization process.

In order to better control the molecular weight distribution of the acrylonitrile copolymer, in the polymerization process between the biological protein solution and the acrylonitrile monomer, or between the biological protein solution, the acrylonitrile monomer, and the second monomer, or between the biological protein solution, the acrylonitrile monomer, the second monomer, and the third monomer, a certain amount of chain transfer agents can be added. The chain transfer agent is selected from dodecyl mercaptan, N-octyl mercaptan, β-mercaptoethanol and isopropanol.

The weight percent of the chain transfer agents in all the components of the fiber is 0.1-0.6%, particularly 0.1-0.5%, and more particularly 0.2-0.4%. Experiments have shown that when the weight percent of the chain transfer agents is less than 0.2%, it is difficult to regulate the molecular weight distribution of the acrylonitrile copolymer. When the weight percent of the chain transfer agents is more than 0.4%, on the one hand, materials are wasted, on the other hand, the molecular weight of polymer will decrease, and the properties of the acrylonitrile copolymer will degrade. Actually, in the formula, the content of the chain transfer agents is very low. In some cases, when the agents are added, the weight percent of the acrylonitrile monomer, and/or the second monomer, and/or the third monomer, and/or biological proteins may be decreased optionally so that the total weight percent of all components adds up to 100%.

The biological proteins of the invention are obtained by a mechanical or chemical method from natural animal fibers selected from wool, cattle hair, horse hair, rabbit hair, camel hair, yak hair, and/or human hair (short hair, long hair, or hair waste). The term "natural animal fibers" refers to not only animal hair, but also animal villi.

The mechanical method of separating biological proteins comprises heating hair to 80-250°C, and then breaking disulfide bonds of the hair by high-pressure hydrolysis, high pressure expansion, or extrusion under a pressure of 0.1-25 MPa to give the biological proteins. Experiments have shown the preferable heating temperature is 90-220°C, more preferably 100-210°C. The preferable pressure range is 0.2-22.0 MPa, more preferably 0.3-20.0 MPa. Too low heating temperature and/or too low pressure are not conductive to breaking disulfide bonds in hair. Too high heating temperature and/or too high pressure may lead to cleavage of biological proteins, and increase equipment cost.

In certain embodiments of the invention, the chemical method for separating the biological proteins comprises acid-base treatment, reduction, and oxidation. All of these methods can achieve the objectives of the invention, and have no effect on the product preparation.

The acid-base treatment method of separating biological proteins comprises swelling hair in an acid solution for 1-20 hours, dissolving the swollen hair in a dilute alkali solution, filtering, and collecting the filtrate for further extracting of biological proteins. The acid is selected from a 1-30 weight % solution of hydrochloric acid, sulfuric acid, or nitric acid. The base is selected from a 1-30 weight % dilute solution of sodium hydroxide, potassium hydroxide, or calcium hydroxide. The hair swelling time in the acid solution is preferably 2-15 hours, more preferably 3-10 hours. If the swelling time is too short, the swelling of the hair will be insufficient, which is not conductive to dissolving the hair. If the swelling time is too long, the efficiency will be low. The weight percent of the acid is preferably 2-28%, and more preferably 3-26%. If the acid concentration is too low, the swelling of the hair will be insufficient, which is not conductive to dissolving the hair. If the acid concentration is too high, waste of base used for dissolving the hair will occur. The weight percent of the base is preferably 2-28%, more preferably 3-26%. If the base concentration is too low, it is not conductive to dissolving the hair. If the base concentration is too high, waste will occur and the resultant fibers will be impaired. The dissolving time of the hair should be modified according to dissolving conditions.

After 90% (by weight) of the hair have dissolved, the separation of proteins should be started, or longer dissolving will cause the proteins to hydrolyze amino acids. The separation of proteins comprises filtering, collecting undissolved proteins, and re-dissolving. Undoubtedly, in order to optimize the process, the acid concentration, base concentration, dissolving time, and swelling time need to be adjusted.

Furthermore, the swelling of the hair in acid and dissolving in base should be conducted at a temperature between 40 and 95°C, particularly between 45 and 90°C, more particularly between 50 and 85°C. If the temperature is too low, the hair will swell and dissolve insufficiently. If the temperature is too high, the hair proteins will hydrolyze into amino acids. Due to water solubility, in the solution spinning process, the amino acids will dissolve in water and spread to a coagulation bath and wash tank, which means, that it will be difficult for the amino acids to stay in the fibers, resulting in unmodified fibers.

Reduction separation of biological proteins comprises dissolving hair with an alkaline solution containing sodium thioglycolate or ammonium thioglycolate for 1-20 hours, particularly 2-15 hours, and more particularly 2-10 hours; and then adding a certain amount of urea into the solution and swelling the hair for 3-50 hours at 0-95°C, filtering out the undissolved hair, and collecting the filtrate to isolate biological proteins. The concentration of sodium thioglycolate or ammonium thioglycolate is 0.1-10 mol/L, particularly 0.2-9 mol/L, and more particularly 0.3-8 mol/L. If the concentration is too low, solids will not dissolve easily. If the concentration is too high, cleavage of proteins will occur and by-products such as various amino acids will be obtained, resulting in waste of raw materials. The alkaline solution refers to a solution of sodium hydroxide or potassium hydroxide, with the pH value 8-14, particularly 8-13, and more particularly 8-12. If the pH value is too low, solids will not dissolve easily or the dissolving time will be too long. If the pH value is too high, the protein cleavage will occur too quickly, and by products such as various amino acids will be produced, resulting in unnecessary waste.

Herein "a certain amount of urea" means adding urea to the alkaline solution until the urea concentration reaches 0.1-10 mol/L, particularly 0.2-9 mol/L, and more particularly 0.3-8 mol/L. If the concentration is too low, solids will not dissolve easily or the dissolving time will be too long. If the concentration is too high, the protein cleavage will occur too quickly, and by products such as various amino acids produced, resulting in unnecessary waste. The swelling temperature is controlled at 0-95°C, particularly 0-90°C, and more particularly 0-85°C. If the temperature is too low, solids will not dissolve easily or the dissolving time will be too long. If the temperature is too high, the protein cleavage will occur too quickly, and by products such as various amino acids produced. The reaction or dissolving time is affected by the concentration of sodium thioglycolate or ammonium thioglycolate, the pH value of the alkaline solution, the concentration of urea, and the solution temperature. Therefore, the dissolving time of the hair should be modified according to dissolving conditions. After 90% (by weight) of the hair is dissolved, the separation, filtration, and extraction of proteins should be started. The undissolved proteins are collected and re-dissolved. Experiments have shown that the dissolving time is generally between 3 and 50 hours.

The oxidation method of separating biological proteins comprises immersing hair with a certain concentration of solution of hydrogen peroxide, peracetic acid, sodium hypochlorite, or sodium chlorate for 1-20 hours, particularly 2-15 hours, and more particularly 2-10 hours, where part of disulfide bonds are oxidized; and then adding a certain concentration of base into the solution and swelling the hair to isolate biological proteins.

Herein "a certain concentration of solution of hydrogen peroxide, peracetic acid, sodium hypochlorite, or sodium chlorate" refers to a solution comprising at least one component selected from hydrogen peroxide, peracetic acid, sodium hypochlorite, or sodium chlorate, and the concentration is 1-50% by weight, particularly 2-45% by weight, and more particularly 2-40% by weight. If the concentration is too low, the oxidation time of disulfide bonds of hair is too long or solids will not dissolve easily. If the concentration is too high, the oxidation is too fast, and the oxidation of disulfide bonds is non-uniform, resulting in a bad dissolving effect.

The alkaline solution comprises at least one component selected from sodium hydroxide or potassium hydroxide solution, and the weight percent is 1-50%, particularly 2-45%, and more particularly 2-40%. If the concentration is too low, the dissolving time is long or solids will not dissolve easily. If the concentration is too high, the alkaline solution is wasted and side reactions may occur. The dissolving temperature is controlled at 30-95°C, particularly 30-90°C, and more particularly 30-85°C. If the temperature is too low, solids will not dissolve easily or the dissolving time will be too long. If the temperature is too high, the protein cleavage will occur quickly, and by products such as various amino acids produced. The immersing time is affected by the concentration of the oxidant, the oxidation time, the concentration of the alkaline solution, and the dissolving time. The dissolving time of the hair should be modified according to dissolving conditions. After 90% (by weight) of the hair is dissolved, the separation of proteins should be started. The undissolved proteins are collected and re-dissolved. Experiments have shown that the dissolving time is generally between 3 and 50 hours.

The biological proteins, which have been separated either by a mechanical method or by a chemical method, should be further purified. The purification method includes but is not limited to an isoelectric point method, electrodialysis, and a semi-permeable membrane method. The selection of purification method has no influence on the properties of the prepared fibers of the invention, just has an influence on the investment in equipment and the production cost.

In accordance with one embodiment of the invention, the obtained biological proteins are dissolved in 15-45 weight % solution of nitric acid, zinc chloride or sodium thiocyanate to yield a biological protein solution. Subsequently, the protein solution is mixed with the acrylonitrile monomer and, the second monomer or the second monomer and the third monomer according to the proportion described in the above formulas. To the mixture, the initiators, or the initiators and the chain transfer agents are added, and allowed to react for 2-10 hours at 30-70°C. There obtained is a copolymer solution comprising acrylonitrile, biological proteins and the second monomer, or a copolymer solution comprising acrylonitrile, biological proteins, the second monomer, and the third monomer. Finally, the copolymer solution is made into fibers by wet spinning technology or the like.

If the above-mentioned polymerization temperature is lower than 30°C, the polymerization will be too slow, and even the polymerization cannot be initiated when the temperature is lower than the decomposition temperature of the free radical initiators. If the polymerization temperature is higher than 70°C, the reaction temperature will be very close to the boiling point of acrylonitrile monomers, resulting in its volatilization, which not only causes the waste of acrylonitrile monomers, but also causes safety problems. Therefore, the preferable temperature is 35-68°C, and more preferably 40-65°C.

If the polymerization time is less than 2 hours, the conversion rate of the acrylonitrile monomers, the second monomer, and the third monomer will be low. If the time is more than 10 hours, the color of the spinning dope will grow heavy, and protein cleavage will occur. Therefore, the preferable polymerization time is 3-9 hours, and more preferably 4-8 hours.

When the preparation method disclosed in certain embodiments of the invention is applied to industrial production, in order to achieve an economic and high effect, process parameters should be modified in accordance with the change of the component proportion. The modification of the process parameters is known to those skilled in the art.

In the fiber formula of the invention, the weight percent of the biological proteins in all the components is 1.0-50.0%, particularly 2.0-45.0%, and more particularly 5.0-40.0%. If the weight percent of the biological proteins is lower than 5.0%, the modification effect on the fiber is not obvious. If the weight percent of the biological proteins is more than 40.0%, the spinning process will become difficult, and the physical and mechanical properties of the prepared synthetic hair are decreased. However, it should be noted that, even if the weight percent of the biological proteins is more than 40.0%, the modified fibers according to the invention can still be produced.

The total concentration of the biological proteins and modified polyacrylonitrile monomers in the spinning dope of the invention (commonly known as solution concentration) is 10-15% by weight, particularly 15-45%, and more particularly 20-40%. If the concentration is too low, the prepared synthetic hair will have a large number of micropores, and the efficiency will be relatively low. If the concentration is too high, in the process of spinning, the dope viscosity will be relatively high, resulting in a process that is difficult to control.

It should be noted that the solution concentration of ordinary textile fibers containing proteins is generally no more than 20%, so the technology disclosed in certain embodiments of the invention is superior to that disclosed in prior art.

The concentration of nitric acid, zinc chloride and sodium thiocyanate in the spinning dope of the invention should meet the dissolving requirement of biological proteins modifying polyacrylonitrile. Generally, the concentration is 15-45% by weight, and the other component of the dope is water.

In order to assure smooth spinning, in certain embodiments of the invention, the wet spinning process and equipment have been properly adjusted. However, the adjustment does not go beyond the field of the prior art, so those skilled in the art can implement the invention without any inventive work.

The fiber of the invention is particularly suitable for the preparation of synthetic hair. Because of the specific formula employed in embodiments of the invention, the synthetic hair is also named simulated protein fiber synthetic hair, and can be further processed into wig, wig sheath, or doll hair.

The diameter of human hair is affected by factors such as ethnic origin, sex, heredity, and age, but generally, a filament titer of human hair is 30-100 dtex. However, a filament titer of ordinary textile fibers is less than 10 dtex. To enable the appearance and properties of synthetic hair of the invention close to that of human hair, a filament titer of the fibers should be also close to that of human hair. A filament titer of the fibers of the invention is 30-100 dtex, and can be selected and adjusted as needed.

In order for the modified polyacrylonitrile fibers to be used for the preparation of synthetic hair, in the present invention, high concentration of biological protein solution (more preferably 20-40%) and high filament titer of fibers (30-100 dtex) are applied, and thereby simulated protein fiber synthetic hair is obtained which has dense structure and is very similar to human hair. Experiments have shown the synthetic hair prepared by the fibers of the invention is very similar to human hair not only in handle, gloss, flame retardancy, and dyeing, but also in compositions and inner quality. The synthetic hair of the invention is obviously superior to the existing synthetic hair, and has a wide development and application prospects. As needed, a filament titer of fibers of the invention can go beyond the range of 30-100 dtex, which does not involve in any technical difficulties.

For further illustrating the invention, some examples are given below. It should be noted that the following are intended to describe only and not to limit the invention.

### Example 1

1000 g of human short hair with length of 1.0-3.0 mm was dissolved in 1 mol/L sodium thioglycolate solution, pretreated for 3 hours, and then urea was added until the concentration was 8 mol/L. The mixture was allowed to react for 37 hours at 25°C, and then citric acid was added to adjust the pH value to 7.0. The biological proteins of the solution were separated by electrodialysis. Analysis showed 900 g of biological proteins having molecular weight of 40,000-80,000 was obtained.

To a polymerizer (15 L) equipped with a mechanical stirrer and reflux condenser, 3500 g of deionized water were added. The polymerizer was flushed by dry nitrogen, and then 1900 g of biological proteins containing water, and 2500 g of zinc chloride was separately added. The mixture in the polymerizer was stirred uniformly for 2 hours at 50°C to give a uniform solution. To the solution, 1500 g of acrylonitrile, 100 g of methyl acrylate, 41.5 g of sodium methacrylate sulfonate, and 32 g of β-mercaptoethanol were added, and after uniform mixing, 15 g of ammonium persulfate and 29 g of sodium bisulfite were further added. The resultant mixture was stirred for 3 hours at 50°C, and then a uniform acrylonitrile spinning dope containing biological proteins as a modifier was obtained. The spinning dope was deaerated, filtered, measured by a metering pump (2.4 mL/rotation), and transferred to a spinneret (100 holes × 0.35 mm) for spinning. The resultant products were solidified in deionized water, washed with water, stretched, and dried to yield fibers having a filament titer of 99.9 dtex.

The prepared fibers comprise 35 weight % biological proteins, and their handle, appearance, curling and shape are close to that of human hair. Wigs and wig sheaths prepared from the fibers resembled well human hair.

### Example 2

Biological proteins were prepared following the method in Example **1**.

To a polymerizer (15 L) equipped with a mechanical stirrer and reflux condenser, 3500 g of deionized water were added. The polymerizer was flushed by dry nitrogen, and then 1900 g of biological proteins containing water and 2500 g of zinc chloride were added. The mixture in the polymerizer was stirred uniformly for 2 hours at 50°C to give a uniform solution. To the solution, 1600 g of acrylonitrile, 142 g of methyl acrylate, and 32 g of isopropanol were added, and after uniform mixing, 15 g of ammonium persulfate and 29 g of sodium bisulfite were further added. The resultant mixture was stirred for 3 hours at 50°C, and then a uniform acrylonitrile spinning dope containing biological proteins as a modifier was obtained. The spinning dope was deaerated, filtered, measured by a metering pump (2.4 mL/rotation), and transferred to a spinneret (100 holes × 0.35 mm) for spinning. The resultant products were solidified in deionized water, washed with water, stretched, and dried to yield fibers with a filament titer of 99.9 dtex.

The prepared fibers had no a third monomer, so their dyeability was not as good as that of the fiber obtained from Example **1**. However, the fibers are still suitable for the preparation of wigs or wig sheaths.

### Example 3

Biological proteins were prepared following the method in Example **1**.

To a polymerizer (15 L) equipped with a mechanical stirrer and reflux condenser, 3500 g of deionized water were added. The polymerizer was flushed by dry nitrogen, and then 1900 g of biological proteins containing water and 2500 g of zinc chloride were added. The mixture in the polymerizer was stirred uniformly for 2 hours at 50°C to give a uniform solution. To the solution, 1500 g of acrylonitrile, 41.5 g of sodium methacrylate sulfonate, and 32 g of dodecyl mercaptan were added, and after uniform mixing, 15 g of ammonium persulfate and 29 g of sodium bisulfite were further added. The resultant mixture was stirred for 3 hours at 50°C, and then a uniform acrylonitrile spinning dope containing biological proteins as a modifier was obtained. The spinning dope was deaerated, filtered, measured by a metering pump (2.4 mL/rotation), and transferred to a spinneret (100 holes × 0.35 mm) for spinning. The resultant products were solidified in deionized water, washed with water, stretched, and dried to yield fibers with a filament titer of 99.9 dtex.

The prepared fibers had no second monomer, so their handle was stubby and not as good as that of the fiber obtained from Example **1**. However, the fibers are still suitable for the preparation of wigs or wig sheaths.

### Example 4

Biological proteins were prepared following the method in Example **1**.

To a polymerizer (15 L) equipped with a mechanical stirrer and reflux condenser, 3500 g of deionized water were added. The polymerizer was flushed by dry nitrogen, and then 1900 g of biological proteins containing water and 2500 g of zinc chloride were added. The mixture in the polymerizer was stirred uniformly for 2 hours at 50°C to give a uniform solution. To the solution, 1600 g of acrylonitrile, 132 g of methyl acrylate, and 41.5 g of sodium methacrylate sulfonate were added, and after uniform mixing, 15 g of ammonium persulfate and 29 g of sodium bisulfite were further added. The resultant mixture was stirred for 3 hours at 50°C, and then a uniform acrylonitrile spinning dope containing biological proteins as a modifier was obtained. The spinning dope was deaerated, filtered, measured by a metering pump (2.4 mL/rotation), and transferred to a spinneret (100 holes × 0.35 mm) for spinning. The resultant products were solidified in deionized water, washed with water, stretched, and dried to yield fibers with a filament titer of 99.9 dtex.

The prepared fibers comprise 35 weight % biological proteins, and their handle, appearance, curling and shape are close to that of human hair. Wigs and wig sheaths prepared from the fibers resembled well human hair. In this example, the spinning time of the spinneret was a half shorter than that in Example **1**, and the fluctuation of physical and mechanical properties of the fibers was larger than that in Example **1**.

### Example 5

Biological proteins were prepared following the method in Example **1**.

To a polymerizer (15 L) equipped with a mechanical stirrer and reflux condenser, 3500 g of deionized water were added. The polymerizer was flushed by dry nitrogen, and then 1900 g of biological proteins containing water and 2500 g of zinc chloride were added. The mixture in the polymerizer was stirred uniformly for 2 hours at 50°C to give a uniform solution. To the solution, 1774 g of acrylonitrile was added, and after uniform mixing, 15 g of ammonium persulfate and 29 g of sodium bisulfite were further added. The resultant mixture was stirred for 3 hours at 50°C, and then a uniform acrylonitrile spinning dope containing biological proteins as a modifier was obtained. The spinning dope was deaerated, filtered, measured by a metering pump (2.4 mL/rotation), and transferred to a spinneret (100 holes × 0.35 mm) for spinning. The resultant products were solidified in deionized water, washed with water, stretched, and dried to yield fibers with a filament titer of 99.9 dtex.

The prepared fibers comprise 35 weight % biological proteins, the spinning time of the spinneret was a half shorter than that in Example **1,** and the fluctuation of physical and mechanical properties of the fibers was larger than that in Example **1.** The handle and appearance of the fibers were not as good as that of the fiber obtained in Example **1.** However, the fibers are still suitable for the preparation of synthetic hair, for example, wigs and wig sheaths.

### Example 6

Biological proteins were prepared following the method in Example **1.**

To a polymerizer (15 L) equipped with a mechanical stirrer and reflux condenser, 3500 g of deionized water were added. The polymerizer was flushed by dry nitrogen, and then 800 g of biological proteins containing water (50 weight %) and 2500 g of zinc chloride were added. The mixture in the polymerizer was stirred uniformly for 1.5 hours at 60°C to give a uniform solution. To the solution, 2000 g of methyl acrylonitrile, 200 g of vinylidene chloride, 100 g of vinylidene bromide, 30 g of sodium allylsulfonate, 15 g of sodium methacrylate sulfonate, and 32 g of dodecyl mercaptan were added, and after uniform mixing, 15 g of ammonium persulfate and 29 g of sodium bisulfite were further added. The resultant mixture was stirred for 4 hours at 60°C, and then a uniform methyl acrylonitrile spinning dope containing biological proteins as a modifier was obtained. The spinning dope was deaerated, filtered, measured by a metering pump (1.2 mL/rotation), and transferred to a spinneret (200 holes × 0.15 mm) for spinning. The resultant products were solidified in deionized water, washed with water, stretched, and dried to yield fibers with a filament titer of 76.6 dtex.

The prepared fibers comprise 15 weight % biological proteins, and the limiting oxygen index reaches 24%. Their handle, appearance, curling and shape are close to that of human hair. Wigs and wig sheaths prepared by the fibers resembled well human hair.

### Example 7

To a high pressure reactor, 1000 g of human hair waste with a length of 0.2-0.8 mm was added. The reactor was flushed with dry nitrogen for 20 minutes, and then the pressure in the reactor was pressurized to 0.6 MPa and the temperature was raised to 140°C. The temperature and pressure were held at that level for 30 seconds. Subsequently, the pressure was decreased quickly to atmospheric pressure, and the human hair waste was extruded into loose protein powders. Analysis showed that the molecular weight of biological proteins was 30,000-60,000.

To a polymerizer (15 L) equipped with a mechanical stirrer and reflux condenser, 3800 g of deionized water were added. The polymerizer was flushed by dry nitrogen, and then 200 g of biological proteins and 2500 g of sodium thiocyanate were added. The mixture in the polymerizer was stirred uniformly for 3 hours at 50°C to give a uniform solution. To the solution, 2000 g of butenenitrile, 500 g of vinyl acetate, 41.5 g of sodium styrene sulfonate, and 32 g of dodecyl mercaptan were added, and after uniform mixing, 29 g of benzoyl peroxide was further added. The resultant mixture was stirred for 4 hours at 65°C, and then a uniform polybutenenitrile spinning dope, containing biological proteins as a modifier, was obtained. The spinning dope was deaerated, filtered, measured by a metering pump (1.2 mL/rotation), and transferred to a spinneret (400 holes × 0.10 mm) for spinning. The resultant products were solidified in sodium thiocyanate - deionized water, washed with water, stretched, and dried to yield fibers with a filament titer of 31.4 dtex.

The prepared fibers comprise 5 weight % biological proteins, and their handle, appearance, curling, shape, and dyeability are close to that of human hair. Wigs and wig sheaths prepared from the fibers resembled well human hair.

### Example 8

Biological proteins were prepared following the method in Example **7**.

To a polymerizer (15 L) equipped with a mechanical stirrer and reflux condenser, 3500 g of deionized water were added. The polymerizer was flushed by dry nitrogen, and then 1000 g of biological proteins and 2500 g of zinc chloride were added. The mixture in the polymerizer was stirred uniformly for 2.0 hours at 60°C to give a uniform solution. To the solution, 1500 g of acrylonitrile, 500 g of butenenitrile, 45 g of methyl acrylonitrile, 500 g of vinylidene bromide, 45 g of sodium allylsulfonate, and 32 g of N-octyl mercaptan were added, and after uniform mixing, 40 g of azobisisobutyronitrile was further added. The resultant mixture was stirred for 4 hours at 60°C, and then a uniform acrylonitrile spinning dope containing biological proteins as a modifier was obtained. The spinning dope was deaerated, filtered, measured by a metering pump (1.2 mL/rotation), and transferred to a spinneret (200 holes × 0.15 mm) for spinning. The resultant products were solidified in deionized water, washed with water, stretched, and dried to yield fibers with a filament titer of 54.3 dtex.

The prepared fibers comprise 28 weight % biological proteins, and the limiting oxygen index reaches 28%. Their handle, appearance, curling, shape, and dyeability are close to that of human hair. Wigs and wig sheaths prepared from the fibers resembled well human hair.

### Example 9

To a reactor, 1000 g of human hair waste with length of 0.5-1.8 mm and 1500 mL of 25 weight % hydrochloric acid were added. The solution was allowed to react for 4 hours, and then 2000 mL of 30 weight % sodium hydroxide were added. After another 4 hours' reaction, 1910 g of biological proteins containing water was separated from the solution with a semi-permeable membrane method. Analysis showed that the weight percent of the biological proteins was 49%.

To a polymerizer (15 L) equipped with a mechanical stirrer and reflux condenser, 1300 g of deionized water were added. The polymerizer was flushed by dry nitrogen, and then 2500 g of biological proteins containing water, and 2500 g of zinc chloride was separately added. The mixture in the polymerizer was stirred uniformly for 3 hours at 40°C to give a uniform solution. To the solution, 1500 g of acrylonitrile, 500 g of methyl acrylonitrile, 500 g of styrene, 45 g of sodium styrene sulfonate, and 32 g of β-mercaptoethanol were added, and after uniform mixing 15 g of sodium chlorate and 25 g of sodium bisulfite were further added. The resultant mixture was stirred for 4 hours at 40°C, and then a uniform acrylonitrile spinning dope containing biological proteins as a modifier was obtained. The spinning dope was deaerated, filtered, measured by a metering pump (2.4 mL/rotation), and transferred to a spinneret (100 holes × 0.35 mm) for spinning. The resultant products were solidified in zinc chloride - deionized water (10 weight %), washed with water, stretched, and dried to yield fibers with a filament titer of 81.3 dtex.

The prepared fibers comprise 40 weight % biological proteins, and their handle, appearance, curling, shape, and dyeability are close to that of human hair. Wigs and wig sheaths prepared from the fibers resembled well human hair.

### Example 10-14

Biological proteins were prepared following the method in Example **1** except that the human hair was substituted separately by wool, camel hair, rabbit hair, horse hair, and yak hair. The other preparation processes were the same as that in Example **1.**

### Example 15-19

Biological proteins were prepared following the method in Example **7** except that the human hair waste was substituted separately with camel hair, wool, rabbit hair, horse hair, and yak hair. The other preparation processes were the same as that in Example **7.**

### Example 20-23

Biological proteins were prepared following the method in Example **9** except that the human hair waste was substituted separately with wool, yak hair, rabbit hair, horse hair, and camel hair. The other preparation processes were the same as that in Example **9**.

### Example 24-29

In separate containers, 1000 g of wool, yak hair, rabbit hair, horse hair, camel hair and human hair was immersed in 20 weight % peracetic acid for 2 hours, and then 18 weight % sodium hydroxide was added. The solutions were stirred at 50°C for 5 hours, and then biological proteins were separated by a semi-permeable membrane method. Analysis showed that from each type of hair about 900 g of biological proteins having molecular weight of 60,000-80,000 was obtained.

The other preparation processes were the same as that in Example **1**.

### Comparison example

To a polymerizer (15 L) equipped with a mechanical stirrer and reflux condenser, 3500 g of deionized water were added. The polymerizer was flushed by dry nitrogen, and 2500 g of zinc chloride was added. The mixture in the polymerizer was stirred uniformly for 2 hours at 50°C to give a uniform solution. To the solution, 1500 g of acrylonitrile, 100 g of methyl acrylate, 41.5 g of sodium methacrylate sulfonate, and 32 g of isopropanol were added, and after uniform mixing, 15 g of ammonium persulfate and 29 g of sodium bisulfite were further added. The resultant mixture was stirred for 3 hours at 50°C, and then a uniform acrylonitrile spinning dope was obtained. The spinning dope was deaerated, filtered, measured by a metering pump (1.2 mL/rotation), and transferred to a spinneret (200 holes × 0.15 mm) for spinning. The resultant products were solidified in deionized water, washed with water, stretched, and dried to yield fibers with a filament titer of 54.9 dtex.

Compared with the fibers obtained in Example **1,** the prepared fibers without biological protein content differ greatly in appearance with respect to human hair. Therefore, the fibers without biological proteins obtained by the method of this example can only be used for the preparation of low grade synthetic hair products.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. A composition useful for preparing modified polyacrylonitrile fiber having biological proteins as a modifier, the composition comprising:
50.0-98.9% by weight of an acrylonitrile monomer;
0.1-0.4% by weight of an initiator; and
1.0-50.0% by weight of a biological protein;
the total weight percent of all components being 100%,
wherein,
said acrylonitrile monomer is selected from acrylonitrile, methyl acrylonitrile, and butenenitrile;
said initiator is a free radical initiator selected from azobisisobutyronitrile, azobisisoheptonitrile, or benzoyl peroxide; or an oxidation - reduction initiator selected from potassium persulfate - sodium bisulfite, ammonium persulfate - sodium bisulfite, sodium chlorate - sodium bisulfite, or sodium hypochlorite - sodium bisulfite; and
said biological protein is obtained by a mechanical or chemical method from natural animal fibers selected from wool, cattle hair, horse hair, rabbit hair, camel hair, yak hair and/or human hair.

2. The composition of claim 1, further comprising a second monomer, said second monomer selected from acrylic acid, methyl acrylate, ethyl acrylate, butyl acrylate, 2-hydroxyethyl acrylate, methacrylic acid, methyl methacrylate, ethyl methacrylate, propyl methacrylate, butyl methacrylate, 2-hydroxyethyl methacrylate, styrene, methyl styrene, vinyl acetate, methylenebutanedioic acid, vinyl chloride, vinylidene chloride, vinyl bromide, vinylidene bromide, and vinylidene fluoride, wherein the weight ratio of the components is as follows: acrylonitrile monomer 30.0-96.9% by weight; initiator 0.1-0.4% by weight; biological protein 1.0-50.0% by weight; and a second monomer 2.0-20.0% by weight, the total weight percent of all components being 100%.

3. The composition of claim 2, further comprising a third monomer, said third monomer selected from sodium methacrylate sulfonate, sodium methallyl sulfonate, sodium allylsulfonate, p-styrenesulfonic acid sodium salt, sodium vinylsulfonate, sulfoalkyl acrylate, and sulfoalkyl methacrylamide, wherein the weight ratio of the components is as follows 20.0-96.8% by weight of an acrylonitrile monomer; .1-0.4% by weight of an initiator; 1.0-50.0% by weight of biological proteins; 2.0-20.0% by weight of a second monomer; and 0.1-10.0% by weight of a third monomer, the total weight percent of all components being 100%.

4. The composition of claim 1, claim 2 or claim 3, further comprising 0.1-0.6% by weight of a chain transfer agent selected from dodecyl mercaptan, N-octyl mercaptan, β-mercaptoethanol, or isopropanol.

5. The composition of claim 4, comprising 20.0-89.2% by weight of said acrylonitrile monomer, 5.0-40.0% by weight of said biological proteins, 0.1-0.3% by weight of said initiator, 5.0-15.0% by weight of said second monomer, 0.5-3.0% by weight of said third monomer, and 0.2-0.4% by weight of said chain transfer agents, wherein said second monomer is selected from vinyl chloride, vinylidene chloride, vinyl bromide, vinylidene bromide, or vinylidene fluoride.

6. A method of preparing a modified polyacrylonitrile fiber of claim 1, claim 2 or claim 3, comprising the steps of:
(1) preparing a solution comprising biological proteins by: i) separating biological proteins by a mechanical or chemical method from natural animal fibers selected from wool, cattle hair, horse hair, rabbit hair, camel hair, yak hair, or human hair; ii) purifying said biological proteins and dissolving in 15-45 weight % nitric acid solution, zinc chloride solution, or sodium thiocyanate solution to give a biological protein solution; said chemical method for separating said biological proteins comprising acid-base treatment, reduction, or oxidation;
(2) preparing a spinning dope of modified polyacrylonitrile fiber by: initiating a polymerization between said solution comprising biological proteins and an acrylonitrile monomer, or between the solution comprising biological proteins, an acrylonitrile monomer, and a second monomer, or between the solution comprising biological proteins, an acrylonitrile monomer, a second monomer, and a third monomer by an initiator at 30-70°C to give a spinning dope of modified polyacrylonitrile fiber comprising biological proteins; the reaction time is 2-10 hours, and the concentration of the spinning dope is 10-50 weight %; and
(3) preparing a modified polyacrylonitrile fiber by: preparing a modified polyacrylonitrile fiber comprising biological proteins from said spinning dope of modified polyacrylonitrile fiber using solution spinning technology.

7. The method of claim 6, wherein the composition comprising 20.0-89.2% by weight of said acrylonitrile monomer, 5.0-40.0% by weight of said biological proteins, 0.1-0.3% by weight of said initiator, 5.0-15.0% by weight of said second monomer, 0.5-3.0% by weight of said third monomer, and 0.2-0.4% by weight of said chain transfer agents, wherein said second monomer is selected from vinyl chloride, vinylidene chloride, vinyl bromide, vinylidene bromide, or vinylidene fluoride, wherein the concentration of said spinning dope is 20-40% by weight.

8. The method of claim 6, wherein said mechanical method of separating said biological proteins comprises heating hair to 80-250°C, and then breaking disulfide bonds of said hair by high-pressure hydrolysis, high pressure expansion, or extrusion under a pressure of 0.1-25 MPa.

9. The method of claim 8, wherein said heating temperature is 100-210°C, and said pressure is 0.3-20.0 MPa.

10. The method of claim 6, wherein said acid-base treatment method of separating biological proteins comprises swelling hair with a 1-30% by weight of acid solution for 1-20 hours at 40-95°C, dissolving the swollen hair with a 1-30% by weight of dilute alkali solution; said acid is selected from a solution of hydrochloric acid, sulfuric acid, or nitric acid; said base is selected from a dilute solution of sodium hydroxide, potassium hydroxide, or calcium hydroxide; after 90% by weight of said hair is dissolved, said proteins are separated, filtered and the filtrate is collected for further extraction.

11. The method of claim10 wherein the weight percent of said acid is 3-26%, the swelling hair time is 3-10 hours, the weight percent of said base is 3-26%, and the swelling and dissolving temperature is 50-85°C.

12. The method of claim 6, wherein said reduction method of separating biological proteins comprises dissolving hair in a 0.1-10 mol/L alkaline solution containing sodium thioglycolate or ammonium thioglycolate with the pH value of 8-14 for 1-20 hours, and then adding 0.1-10 mol/L urea into the solution and swelling the hair for 3-50 hours at 0-95°C; after 90% by weight of said hair is dissolved, said proteins are separated, filtered and the filtrate is collected for further extraction; said alkaline solution is sodium hydroxide or potassium hydroxide solution.

13. The method of claim 12, wherein the concentration of said alkaline solution containing sodium thioglycolate or ammonium thioglycolate is 0.3-8 mol/L, the pH value 8-12; the hair dissolving time is 2-10 hours; the urea concentration in said alkaline solution is 0.3-8 mol/L; and said reaction temperature is 0-85°C.

14. The method of claim 6, wherein said oxidation method of separating biological proteins comprises immersing hair with a 1-50% by weight of solution of hydrogen peroxide, peracetic acid, sodium hypochlorite, or sodium chlorate for 1-20 hours at 30-85°C, and then adding a 1-50% by weight of alkaline solution into the solution and swelling the hair for 3-50 hours at 30-95°C; after 90% by weight of said hair is dissolved, said proteins are separated, filtered and the filtrate is collected for further extraction; said alkaline solution is sodium hydroxide or potassium hydroxide solution.

15. The method of claim 14, wherein the concentration of said hydrogen peroxide, peracetic acid, sodium hypochlorite, or sodium chlorate is 2-40% by weight; the hair dissolving time is 2-10 hours; the concentration of said alkaline solution is 2-40 weight %; and said dissolving temperature is 30-85°C.

16. The method of claim 6, wherein the polymerization time is 4-8 hours, and the polymerization temperature is 40-65°C.

17. The method of claim 6, wherein the composition comprising 20.0-89.2% by weight of said acrylonitrile monomer, 5.0-40.0% by weight of said biological proteins, 0.1-0.3% by weight of said initiator, 5.0-15.0% by weight of said second monomer, 0.5-3.0% by weight of said third monomer, and 0.2-0.4% by weight of said chain transfer agents, wherein said second monomer is selected from vinyl chloride, vinylidene chloride, vinyl bromide, vinylidene bromide, or vinylidene fluoride.

18. The method of claim 7, wherein the weight ratio of the components is as follows 20.0-96.8% by weight of an acrylonitrile monomer; .1-0.4% by weight of an initiator; 1.0-50.0% by weight of biological proteins; 2.0-20.0% by weight of a second monomer; 0.1-10.0% by weight of a third monomer; and 0.1-0.6% by weight of a chain transfer agent selected from dodecyl mercaptan, N-octyl mercaptan, β-mercaptoethanol, or isopropanol.

19. The composition of claim 1, 2 or 3, wherein the filament titer of the modified polyacrylonitrile fiber is 30-100 dtex, the fiber is suitable for making synthetic hair product such as hairpieces.

20. The composition of claim 5, wherein the filament titer of the modified polyacrylonitrile fiber is 30-100 dtex, the fiber is suitable for making synthetic hair product such as hairpieces.
